(19) Europäisches Patentamt
European Patent Office
Office européen des brevets

(11) Publication number: 0 226 911 B1

(12) EUROPEAN PATENT SPECIFICATION

(45) Date of publication of the patent specification: 25.07.90

(51) Int. Cl.[5]: C25B 11/20, H01M 8/10

(21) Application number: 86116946.4

(22) Date of filing: 05.12.86

(54) **An improved solid polymer electrolyte electrode.**

(30) Priority: 09.12.85 US 806713
09.12.85 US 806715
09.12.85 US 806717

(43) Date of publication of application: 01.07.87 Bulletin 87/27

(45) Publication of the grant of the patent: 25.07.90 Bulletin 90/30

(84) Designated Contracting States: AT BE CH DE ES FR GB IT LI LU NL SE

(56) References cited:
EP-A- 0 031 660
EP-A- 0 081 251
GB-A- 2 117 797
US-A- 3 134 697

(73) Proprietor: THE DOW CHEMICAL COMPANY, 2030 Dow Center Abbott Road P.O. Box 1967, Midland Michigan 48640-1967(US)

(72) Inventor: McIntyre, John M., 319 Petunia, Lake Jackson Texas 77566(US)
Inventor: Birdwell, Jeffrey D., 207 Nasturtium, Lake Jackson Texas 77566(US)
Inventor: Smith, Bruce R., 58 Blackgum Court, Lake Jackson Texas 77566(US)

(74) Representative: Huber, Bernhard, Dipl.-Chem. et al, Patentanwälte H. Weickmann, Dr. K. Fincke F.A. Weickmann, B. Huber Dr. H. Liska, Dr. J. Prechtel Möhlstrasse 22 Postfach 860 820, D-8000 München 86(DE)

EP 0 226 911 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention provides for a solid polymer electrolyte (SPE) structure that minimizes the electrical resistance between a current collector and an embedded or bonded electrode.

Solid polymer electrolyte (SPE) cells refer to cells in which one or both electrodes are bonded to or embedded in a polymeric ion exchange membrane. Such cells are rather well known in the art and are discussed in detail in the following U.S. Patent Nos. 4,315,805 to Darlington, et al. (February 16, 1982); 4,364,815 to Darlington, et al. (December 12, 1982); 4,272,353 to Lawrence, et al. (June 9, 1981); and 4,394,229, to Korach (July 19, 1983).

In SPE cells, a current collector is pressed against and contacts the electrode and provides a pathway for electrical current to flow from a power supply to the electrode. Current collectors are electrically conductive, hydraulically permeable matrices which may take a variety of shapes, sizes, and types, including metallic window screen, punched metallic plates, expanded metals, and the like. The following U.S. Patents describe some commonly-used types of current collectors: No. 4 299 674 to Korach (November 10, 1981); No. 4 468 311 to de Nora, et al. (August 28, 1984); and No. 4 215 183 to MacLeod (July 29, 1980).

SPE cells often have major problems due to the high electrical resistance between the embedded or bonded electrodes and the current collectors which are pressed against the electrode. Many workers in the art have attempted to solve the high resistance problem in a variety of ways. Some solutions include the use of a mattress as shown in U. S. Patent No. 4 468 311 issued to de Nora, et al. (August 28, 1984); or by applying the electro-catalyst directly to a conductive carbon cloth which acts as the current collector, as described in U.S. Patent No. 4 239 396 issued to Allen, et al. (October 6, 1981).

Other solutions of the high electrical resistance problem are based on the use of electrodes which are made by the bonding of a plurality of electrically conductive particles to a polymer membrane. In U.S. Patent No. 3 134 697 to Niedrach (May 26, 1964), such an electrode is prepared by suspending metal particles in an incompletely polymerized ion exchange resin and completing the polymerization of the resin afterwards. In the European Patent Application No. 0 031 660 by Asano et al. (December 11, 1980), the polymer membrane is coated with metal particles by vacuum deposition or by bonding with a Teflon® resin as a binder to produce a membrane having an electrically conductive surface.

The invention particularly resides in a method for forming a solid polymer electrolyte structure comprising:

(a) forming a mixture of a polytetrafluoroethylene or a fluorocarbon ion exchange active polymer in its thermoplastic form and a plurality of catalytically active, electrically conductive particles;

(b) forming the mixture into a particle containing film;

(c) contacting the film with a fluorocarbon membrane in its thermoplastic form;

(d) contacting the particle-containing film with an electrically conductive, hydraulically permeable matrix, thereby forming a laminate having a membrane on one side, a matrix on another side and a plurality of catalytically active particles therebetween, wherein the matrix is selected from carbon cloth, carbon paper, carbon felt, a metal screen, a metal felt or a porous metal sheet, and wherein the matrix has a resistivity of from 600,000 to 1375 microohm-centimeters; and

(e) applying sufficient pressure to the laminate to embed at least a portion of the matrix into the membrane while the membrane is in its thermoplastic form thereby forming a membrane having said catalytically active particles present on the membrane at a level of less than about 25 $mg/cm^2$ of membrane area;

(f) converting the membrane into the ionic form.

The single figure illustrates the SPE structure 100 prepared according to the present invention comprising a membrane sheet 120, a plurality of electrically conductive particles 110, and an electrically conductive, hydraulically permeable matrix 130.

As a result of the intimate contact between the membrane sheet, the electrically conductive particles, and the electrically conductive, hydraulically permeable matrix (which serves as a current collector and which is connected to a power supply), the resistance to the flow of electrical energy is minimized and, thus, the cell operates more efficiently than cells employing the SPE structures of the prior art.

The SPE structure prepared according to the present invention includes embodiments where electrically conductive particles are bonded to or embedded in one, or both, sides of the membrane sheet.

The SPE structure 100 is composed of a membrane sheet 120 which has a plurality of electrically conductive particles 110 embedded into it. The particles are in physical and electrical contact with an electrically conductive, hydraulically permeable matrix 130, which is also embedded into the membrane sheet 120.

The membrane sheet divides the anode compartment from the cathode compartment and limits the type and amount of fluids and/or ions that pass between the anode compartment and the cathode compartments. The membrane may be a single layer membrane or a multi-layer composite membrane.

The membrane may be constructed of a fluorocarbon-type material or of a hydrocarbon-type material. Such membrane materials are well known in the art. Preferably, however, fluorocarbon materials are generally employed because of their chemical stability.

Non-ionic (thermoplastic) forms of perfluorinated polymers described in the following U.S. Patents are suitable for use in the present invention: U.S. Patent Nos. 3,282,875; 3,909,378; 4,025,405; 4,065,366; 4,116,888; 4,123,336; 4,126,588; 4,151,052; 4,176,215; 4,178,218; 4,192,725; 4,209,635; 4,212,713; 4,251,333; 4,270,996; 4,329,435; 4,330,654; 4,337,137; 4,337,211; 4,340,680; 4,357,218; 4,358,412; 4,358,545; 4,417,969; 4,462,877; 4,470,889; and 4,478,695; and European Patent Application 0,027,009. Such polymers usually have an equivalent weight in the range of from 500 to 2000.

To allow the cloth and the electrically conductive particles to be embedded into the fluorocarbon membrane, it is desirable for the fluorocarbon membrane to be in its thermoplastic form. It is in a thermoplastic form when it is made and before it is converted into an ion exchange form. By thermoplastic form, it is meant, for instance, that the membrane has $SO_2X$ pendant groups rather than ionically bonded $SO_3Na$ or $SO_3H$ pendant groups, where X is -F, $-CO_2$, $-CH_3$,or a quaternary amine.

Particularly preferred fluorocarbon materials for use in forming membranes are copolymers of monomer I with monomer II (as defined below). Optionally, a third type of monomer may be copolymerized with I and II.

The first type of monomer is represented by the general formula:

$CF_2{=}CZZ'$ (I)

where:

Z and Z′ are independently selected from -H, -Cl, -F, and -CF3.

The second monomer consists of one or more monomers selected from compounds represented by the general formula:

$Y{-}(CF_2)_a{-}(CFR_f)_b{-}(CFR_{f'})_c{-}O{-}[CF(CF_2X){-}CF_2{-}O]_n{-}CF{=}CF_2$ (II)

where:

Y is selected from $-SO_2Z$, -CN, -COZ, and $C(R_3f)(R_4f)OH$;

Z is selected from -I, -Br, -Cl, -F, -OR, and $NR_1R_2$;

R is a branched or linear alkyl radical having from 1 to 10 carbon atoms or an aryl radical;

$R^3f$ and $R^4f$ are independently selected from perfluoroalkyl radicals having from 1 to 10 carbon atoms;

$R_1$ and $R_2$ are independently selected from H, a branched or linear alkyl radical having from 1 to 10 carbon atoms and an aryl radical;

a is 0-6;

b is 0-6;

c is 0 or 1;

provided a+b+c is not equal to 0;

X is selected from Cl, Br, F, and mixtures thereof when n>1;

n is 0 to 6; and

$R_f$ and $R_{f'}$ are independently selected from F, Cl, Br, perfluoroalkyl radicals having from 1 to 10 carbon atoms and fluorochloroalkyl radicals having from 1 to 10 carbon atoms.

Particularly preferred is a monomer where Y is $-SO_2F$ or $-COOCH_3$; n is 0 or 1; $R_f$ and $R_{f'}$ are F; X is –Cl or –F; and a+b+c is 2 or 3.

The third and optional monomer suitable is one or more monomers selected from the compounds represented by the general formula:

$Y'{-}(CF_2)_{a'}{-}(CFR_f)_{b'}{-}(CFR_{f'})_{c'}{-}O{-}[CF(CF_2X'){-}CF_2{-}O]_{n'}{-}CF{=}CF_2$ (III)

where:

Y′ is selected from F, Cl and Br;

a′ and b′ are independently 0–3;

c′ is 0 or 1;

provided a′+b′+c′ is not equal to 0;

n′ is 0–6;

$R_f$ and $R_{f'}$ are independently selected from Br, Cl, F, perfluoroalkyl radicals having from 1 to 10 carbon atoms, and chloroperfluoroalkyl radicals having from 1 to 10 carbon atoms; and

X′ is selected from F, Cl, Br, and mixtures thereof when n′>1.

Conversion of Y to ion exchange groups is well known in the art and consists of a reaction of Y with an alkaline solution.

While the fluorocarbon membrane is in its thermoplastic from, it is capable of softening when heated and hardening again when cooled. Thus, the cloth can be easily pressed into the membrane when the membrane has been heated. The temperature to which the membrane is preferably heated to make it sufficiently soft to allow the cloth to be embedded therein depends, to a great extent, on the chemical formulation of the membrane. In general, however, temperatures in the range of from 150°C to 350°C for membranes when Y= $-SO_2F$ (as defined in Equation II above), or 150°C to 300°C for membranes when Y= $-CO_2CH_3$ (as defined in Equation II above). Hydrocarbon-based membranes may (depending upon the exact composition of the hydrocarbon material) be heated to a temperature of from 100°C to 190°C.

For example, a membrane sheet may be prepared by hot pressing a sulfonyl fluoride powder having an equivalent weight of about 1000, as described in U.S. Patent No. 4,330,654 between two sheets of glass fiber reinforced polytetrafluoroethylene at a temperature of about 310°C under a pressure of about 0.75 tons per square inch (10,353 kPa) for about 1.25 minutes. The resulting sheet, having a diameter of

from 15 to 18 cm, has a thickness of from 0.0025 to 0.4 mm, preferably, from 0.1 to 0.25 mm, most preferably, from 0.05 to 0.15 mm.

In the present invention, it is important to make an effective bond between the electrically conductive, hydraulically permeable matrix and the membrane.

Such a bond may be made with or without the use of externally-applied pressure during bonding. It has been discovered, however, that better bonding is generally obtained when the membrane and the electrically conductive, hydraulically permeable matrix are first contacted and heated at zero pressure for about 1 minute, followed by application of a pressure of from 1 to 8 tons per square inch (13,780 to 110,240 kPa) for from 0.2 to 2 minutes.

The present invention requires that at least one of the electrodes be in the form of a plurality of electrically conductive particles embedded into the membrane sheet. This is what makes a SPE electrode. The electrode composed of a plurality of electrically conductive particles can be either the cathode or the anode. Optionally, both electrodes can be electrically conductive particles embedded into opposite sides of the membrane sheet. For the purposes of the present discussion, the forms of both electrodes will be described as though they are electrically conductive particles and will also be described as if they are separate, conventional electrodes.

Conventional anodes are usually hydraulically permeable, electrically conductive structures made in a variety of shapes and styles including, for example, a sheet of expanded metal, perforated plate, punched plate, unflattened diamond shaped expanded metal, or woven metallic wire. Metals suitable for use as anodes include tantalum, tungsten, niobium, zirconium, molybdenum, and preferably, titanium, and alloys containing major amounts of these metals.

Optionally, the anode may be an SPE electrode consisting of a plurality of electrically conductive particles embedded into the membrane sheet. Materials suitable for use as electrocatalytically active anode materials include, for example, activating substances such as oxides of platinum group metals like ruthenium, iridium, rhodium, platinum, palladium, either alone or in combination with an oxide of a film-forming metal. Other suitable activating oxides include cobalt oxide either alone or in combination with other metal oxides. Examples of such activating oxides are found in U.S. Patents Nos. 3,632,498; 4,142,005; 4,061,549; and 4,214,971.

Conventional cathodes are usually hydraulically permeable, electrically conductive structures made in a variety of shapes and styles including, for example, a sheet of expanded metal, perforated plate, punched plate, unflattened diamond shaped expanded metal, or woven metallic wire. Metals suitable for use as a cathode include, for example, copper, iron, nickel, lead, molybdenum, cobalt, and alloys containing a major proportion of these metals, such as low carbon stainless steel, and metals or alloys coated with substances such as silver, gold, platinum, ruthenium, palladium, and rhodium.

Optionally, as has been stated, the cathode may be an SPE electrode consisting of a plurality of electrically conductive particles embedded into the membrane sheet. Materials suitable for use as electrocatalytically active cathode materials include, for example, a platinum group metal or metal oxide, such as ruthenium or ruthenium oxide. U.S. Patent No. 4,465,580 describes such cathodes.

The electrically conductive particles, whether used as an anode or as a cathode are preferably finely divided and have a high surface area. For example, in the case of an oxygen or hydrogen electrode fuel cell, platinum black having a surface area of greater than 25 $m^2/g$ or high surface area (800–1800 $m^2/g$) platinum on activated carbon powder (average particle size 10–30 μm) are quite suitable for use as the anode and the cathode. In the case of a chlorine cell, an electrode may be prepared in which ruthenium dioxide particles are prepared by thermal decomposition of ruthenium nitrate for 2 hours at a temperature of 450°C. The resulting oxide may then be ground using a mortar and pestle and the portion which passed through a 325 mesh sieve (less than 44 μm) used to prepare an electrode.

The electrically conductive, hydraulically permeable matrix which acts as a current collector to transmit electrical energy to or from the SPE electrode, may be composed of a variety of substances including carbon cloth, carbon paper, carbon felt, metallic screens, metallic felt, and porous metallic sheets. Preferably, however, the electrically conductive, hydraulically permeable matrix is a carbon cloth because carbon cloth is readily available, performs well, is easily handled, and is relatively inexpensive.

The cloth most preferably used in this invention is one having a low electrical resistivity, is relatively inexpensive, possesses sufficient strength for fabrication, and has adequate surface properties, such as roughness, to provide good bonding between the ion exchange membrane and itself. It is also preferable to provide good electrical contact between the carbon cloth and the electrocatalytically active particles of the electrode.

The type of carbon cloth suitable for use in the present invention is commercially available from a variety of sources including: Stackpole Fibers Co. sold under the trade names Panex PWB-3, PWB-6, KFB and SWB-8; from Union Carbide Corp. sold under the trade names WCA Graphite Cloth and VCK and VCA carbon cloth. Carbon cloth may also be woven from carbon fibers available from Fiberite Corp. sold under the trade names Celion 1000, Celion 3000, Celion 6000, Celion 12 000, or from Celanese Corporation sold as C-6, or G-50. These materials may vary in physical properties but are acceptable for use in the present invention as long as they are sufficiently strong to maintain their physical integrity during fabrication. Fiber size and weave patterns may also vary and are not critical to the successful operation of the present invention. Cloth useful in the present invention preferably has a thickness of

from 0.05 to 0.65 mm and an electrical resistivity of from 600,000 to 1375 microohm-centimeters. More preferably the cloth used in the present invention has a resistivity of approximately 1500 microohm-centimeters.

The SPE structure may then be fabricated by preparing the membrane in the thermoplastic form, embedding the electrocatalytically active particles into the membrane, bonding the current collector over the particles, and then converting the membrane to its ionic form by reacting it, in the case of $-SO_2F$ pendant groups, with NaOH under the following conditions: (1) immerse the film in about 25 weight percent sodium hydroxide for about 16 hours at a temperature of about 90°C (2) rinse the film twice in deionized water heated to a temperature of about 90°C using 30 to 60 minutes per rinse. The pendant group is then in the $-SO_3^{-}Na^{+}$ form. Cations other than $Na^{+}$ can be made to replace the $Na^{+}$ if practical (such as $H^{+}$).

The electrocatalytically active particles may be incorporated into the surface of the membrane using a variety of techniques including, for example, pressing, slurrying with a solvent and blending with the membrane or other polymer powders. Such techniques are rather well known in the art. One technique involves the use of platinum particles applied to carbon powder by being brushed evenly over a fluorocarbon membrane film in its thermoplastic form. The so-coated film is then placed between sheets of glass fiber reinforced polytetrafluoroethylene and hot pressed at a temperature of from 240°C to 310°C at a pressure of from 0.5 to 1 ton/in$^2$ (6894 to 13,788 kPa) of pressure for from 1 to 10 minutes. The current collector may then be bonded to the so-coated membrane by placing it onto the membrane so that it is in contact with the particles, and hot pressing the combination at a temperature of from 240°C to 310°C at a pressure of from 0.5 to 1 ton/in$^2$ (6894 to 13,788 kPa) for a period of from 1 to 10 minutes.

The quantity of particles used on the membrane film to form the SPE electrode may vary depending upon the activity of the electrocatalyst, its cost, etc. For chlor-alkali SPE membranes, the amount of catalyst used is usually from 0.4 to 1.0 milligrams catalyst/square centimeter of membrane area. There is an upper limit on the amount of particles which may be placed onto the membrane to prevent the particles from penetrating the membrane. The upper limit has been determined to be about 25 milligrams catalyst/square centimeter of membrane area.

An optional way of applying the electrically conductive particles is to make a suspension of the particles in a liquid and spaying or pouring the suspension over the membrane, allow the liquid to evaporate, and then hot pressing the particles into the membrane with or without the carbon cloth in place. For example platinum and carbon particles may be slurried in dibromotetrafluoroethane and poured or sprayed onto a membrane. The dibromotetrafluoroethane is then allowed to evaporate. Carbon cloth current collectors can then be hot pressed onto these so-formed electrodes.

A second alternative for preparing the SPE electrode of the present invention is to first prepare a thin film composed of electrocatalytically active particles bound together using a binder such as polytetrafluoroethylene or a membrane in its thermoplastic form. Preferably the binder material/catalyst combination is in the form of a porous film. This film can then be laminated between the current collector and the membrane. For example, a film can be prepared from a blend of the thermoplastic form of an ion exchange membrane containing about 10 weight percent of 5 percent platinum on 30 µm carbon particles. This may be hot pressed at a temperature of 310°C at a pressure of 1 ton per square inch (13,788 kPa) for 1.25 minutes to prepare a film having a thickness of less than 0.025 mm. This film can be laminated between the carbon cloth current distributor and membrane by a conventional hot pressing technique. Thereafter, the carbon cloth may be embedded into the membrane sheet by preheating the membrane/carbon cloth pair at a temperature of 120°C at atmospheric pressure for about 30 seconds, followed by heating at the same temperature under a pressure of from 1 to 2 tons/in$^2$ (13,788 to 27,576 kPa) for 225 seconds, then heating under a pressure of from 2 to 3 tons/in$^2$ (25,576 to 41,364 kPa) for about 60 seconds (for a hydrocarbon based membrane having a melting point of from 125°C to 140°C. Time interval temperature and pressure may vary depending on selection of type and thickness of membrane.

Optionally, the electrically conductive particles may be applied to the carbon cloth prior to the carbon cloth being embedded into the membrane sheet. Such a procedure involves preparing the cloth as described in U.S. Patent No. 4 293 396, (October 6, 1981). The so-prepared cloth can then be bonded to the membrane by contacting and preheating the membrane/cloth pair at a temperature of about 240°C at atmospheric pressure for 60 seconds, then applying a pressure of from 4 to 6 tons/in$^2$ (55,152 to 82,728 kPa) at a temperature of about 240°C for a period of from 40 to 120 seconds, followed by cooling to a temperature of from 20°C to 25°C in air.

The solid polymer electrolyte structure of the present invention is useful in a wide variety of electrochemical cells including, for example, fuel cells for the continuous production of electrical energy; electrolysis cells for the production of chemical products; and batteries for the intermittent production of electrical energy.

## Claims

1. A method for forming a solid polymer electrolyte structure comprising:

(a) forming a mixture of a polytetrafluoroethylene or a fluorocarbon ion exchange active polymer in its thermoplastic form and a plurality of catalytically active, electrically conductive particles;

(b) forming the mixture into a particle containing film;

(c) contacting the film with a fluorocarbon membrane in its thermoplastic form;
(d) contacting the particle-containing film with an electrically conductive, hydraulically permeable matrix, thereby forming a laminate having a membrane on one side, a matrix on another side and a plurality of catalytically active particles therebetween, wherein the matrix is selected from carbon cloth, carbon paper, carbon felt, a metal screen, a metal felt or a porous metal sheet, and wherein the matrix has a resistivity of from 600,000 to 1375 microohm-centimeters; and
(e) applying sufficient pressure to the laminate to embed at least a portion of the matrix into the membrane while the membrane is in its thermoplastic form thereby forming a membrane having said catalytically active particles present on the membrane at a level of less than about 25 mg/cm$^2$ of membrane area;
(f) converting the membrane into the ionic form.

2. A method according to claim 1 wherein the electrically conductive, catalytically active particles are directly contacted without prior forming into a film with ion exchange active polymer with at least a portion of one face of the membrane, while said membrane is in a softened state, to form a membrane/particle composite, wherein the catalytically active particles are present at a level of less than 25 mg/cm$^2$ of membrane area, subjecting the membrane/particle composite to a pressure sufficient to embed at least a portion of the particles into the softened membrane; and contacting the membrane/particle composite with the electrically conductive, hydraulically permeable matrix.

3. The method of Claim 2, wherein said matrix is selected from carbon cloth, carbon paper, carbon felt, a metal screen, a metal felt or a porous metal sheet.

4. The method of any one of the preceding claims, wherein said matrix is a carbon cloth having a thickness of from 0.05 to 0.65 mm.

5. The method of Claim 2, 3 or 4, wherein the catalytically active particles have an average particle size diameter of from 10 to 30 µm.

6. The method of Claim 5, wherein the catalytically active particles have a surface area of from 800 to 1800 m$^2$/g.

7. The method of any of the preceding claims, wherein the catalytically active particles in the case of anodes are selected from platinum group metal oxides alone or in combination with an oxide of a film-forming metal or cobalt oxide either alone or in combination with other metal oxides of film forming metals and in the case of cathodes are selected from platinum group metal or metal oxide.

8. The method of one of the preceding claims, wherein the catalytically active particles are present on the membrane at a level of from 0.4 to 1.0 mg/cm$^2$ of membrane area.

9. The method of any one of the preceding claims, wherein the catalytically active particles are applied to both sides of the membrane.

10. The method of any one of the preceding claims, wherein the fluorocarbon polymer has an equivalent weight of from 500 to 2000.

11. The method of any one of the preceding claims, wherein a plurality of electrically conductive particles form an anode on one side of the membrane sheet and a plurality of electrically conductive particles form a cathode on the opposite side of the membrane.

12. The method of any one of claims 1 to 10, wherein one electrode is composed of a membrane sheet carrying on one side a plurality of electrically conductive particles and on the other side of the membrane sheet the electrode is composed of a porous metal plate.

13. The method of any one of the preceding claims, wherein said membrane has a thickness of from 0.0025 to 0.4 mm.

14. The method of claim 2, wherein the fluorocarbon membrane is heated to a temperature of from 150°C to 350°C for membranes when Y = $-SO_2F$ and from 150°C to 300°C for membranes when Y = $-CO_2CH_3$.

15. The method of any one of the preceding claims, wherein the pressure to embed the particles into the membrane is from 13,780 to 110,240 kPa.

16. The method of Claim 15, wherein the pressure is applied from 0.2 to 2 minutes.

**Patentansprüche**

1. Verfahren zur Herstellung einer Festkörperpolymerelektrolyt-Struktur umfassend:
(a) Bildung einer Mischung eines Polytetrafluorethylens oder eines Fluorkohlenstoff-ionenaustauschaktiven Polymers in seiner thermoplastischen Form und einer Vielzahl katalytisch aktiver, elektrisch leitfähiger Teilchen;
(b) Formen der Mischung in einen Teilchen enthaltenden Film;
(c) Inkontaktbringen des Filmes mit einer Fluorkohlenstoff-Membran in ihrer thermoplastischen Form;
(d) Inkontaktbringen des Teilchen enthaltenden Films mit einer elektrisch leitfähigen, hydraulisch permeablen Matrix, wodurch ein Laminat mit einer Membran auf einer Seite, einer Matrix an der anderen Seite und einer Vielzahl katalytisch aktiver Teilchen dazwischen ausgebildet wird, und worin die Matrix ausgewählt ist aus Kohlegewebe, Kohlepapier, Kohlefilz, einem Metallsieb, einem Metallfilz oder einem porösen Metallblatt, und worin die Matrix einen spezifischen Widerstand von 600.000 bis 1375 Mikroohm-cm besitzt; und

(e) Anlegen eines ausreichenden Druckes an das Laminat, um mindestens einen Teil der Matrix in der Membran einzubetten, während die Membran in ihrer thermoplastischen Form ist, wobei eine Membran ausgebildet wird, an der die katalytisch aktiven Teilchen in einer Menge von weniger als ca. 25 $mg/cm^2$ Membranfläche vorhanden sind;
(f) Überführen der Membran in die ionische Form.

2. Verfahren nach Anspruch 1, dadurch gekennzeichnet, daß man die elektrisch leitfähigen, katalytisch aktiven Teilchen direkt, ohne sie vorher in einen Film mit einem ionenaustauschaktiven Polymer einzuarbeiten, mit mindestens einem Teil einer Fläche der Membran in Kontakt bringt, während diese Membran in einem erweichten Zustand ist, um eine Membran/Teilchen-Zusammensetzung auszubilden, worin die katalytisch aktiven Teilchen in einer Menge von weniger als 25 $mg/cm^2$ Membranfläche vorhanden sind, die Membran/Teilchen-Zusammensetzung einem ausreichenden Druck unterwirft, um mindestens einen Teil der Teilchen in die erweichte Membran einzubetten; und die Membran/Teilchen-Zusammensetzung mit der elektrisch leitfähigen, hydraulisch permeablen Matrix in Kontakt bringt.

3. Verfahren nach Anspruch 2, dadurch gekennzeichnet, daß die Matrix ausgewählt ist aus Kohlegewebe, Kohlepapier, Kohlefilz, einem Metallsieb, einem Metallfilz oder einem porösen Metallblatt.

4. Verfahren nach einem der vorhergehenden Ansprüche, dadurch gekennzeichnet, daß die Matrix ein Kohlegewebe mit einer Dicke von 0.05 bis 0.65 mm ist.

5. Verfahren nach Anspruch 2, 3, oder 4, dadurch gekennzeichnet, daß die katalytisch aktiven Teilchen einen durchschnittlichen Teilchendurchmesser von 10 bis 30 µm besitzen.

6. Verfahren nach Anspruch 5, dadurch gekennzeichnet, daß die katalytisch aktiven Teilchen eine Oberfläche von 800 bis 1800 $m^2/g$ besitzen.

7. Verfahren nach einem der vorhergehenden Ansprüche, dadurch gekennzeichnet, daß die katalytisch aktiven Teilchen im Falle von Anoden ausgewählt sind aus Platingruppenmetalloxiden, allein oder in Kombination mit einem Oxid eines filmbildenden Metalls oder Kobaltoxid entweder allein oder in Kombination mit anderen Metalloxiden filmbildender Metalle, und im Fall von Kathoden ausgewählt sind aus Platingruppenmetall oder -metalloxid.

8. Verfahren nach einem der vorstehenden Ansprüche, dadurch gekennzeichnet, daß die katalytisch aktiven Teilchen auf der Membran in einer Menge von 0.4 bis 1.0 $mg/cm^2$ Membranfläche vorhanden sind.

9. Verfahren nach einem der vorhergehenden Ansprüche, dadurch gekennzeichnet, daß die katalytisch aktiven Teilchen auf beide Seiten der Membran aufgebracht werden.

10. Verfahren nach einem der vorhergehenden Ansprüche, dadurch gekennzeichnet, daß das Fluorkohlenstoff-Polymer ein Äquivalentgewicht von 500 bis 2000 besitzt.

11. Verfahren nach einem der vorhergehenden Ansprüche, dadurch gekennzeichnet, daß eine Vielzahl elektrisch leitfähiger Teilchen eine Anode an einer Seite des Membranblattes bilden, und eine Vielzahl von elektrisch leitfähigen Teilchen eine Kathode auf der anderen Seite der Membran bilden.

12. Verfahren nach einem der Ansprüche 1 bis 10, dadurch gekennzeichnet, daß eine Elektrode zusammengesetzt ist aus einem Membranblatt, das auf einer Seite eine Vielzahl elektrisch leitfähiger Teilchen trägt, und auf der anderen Seite des Membranblattes die Elektrode aus einer porösen Metallplatte zusammengesetzt ist.

13. Verfahren nach einem der vorhergehenden Ansprüche, dadurch gekennzeichnet, daß die Membran eine Dicke von 0.0025 bis 0.4 mm besitzt.

14. Verfahren nach Anspruch 2, dadurch gekennzeichnet, daß die Fluorkohlenstoff-Membran bei Membranen mit $Y = -SO_2F$ auf eine Temperatur von 150° C bis 350° C erhitzt wird, und auf 150° C bis 300° C bei Membranen, worin $Y = -CO_2CH_3$ ist.

15. Verfahren nach einem der vorhergehenden Ansprüche, dadurch gekennzeichnet, daß der Druck zur Einbettung der Teilchen in die Membran 13 780 bis 110 240 kPa. beträgt.

16. Verfahren nach Anspruch 15, dadurch gekennzeichnet, daß der Druck während 0.2 bis 2 Minuten appliziert wird.

**Revendications**

1. Procédé permettant de former une structure d'électrolyte polymère solide, consistant:
(a) à former un mélange d'un polytétrafluoroéthylène ou d'un polymère actif échangeur d'ions du type hydrocarbure fluoré, se présentant sous sa forme thermoplastique, et de multiples particules électriquement conductrices et actives sur le plan catalytique,
(b) à façonner ce mélange sous la forme d'un film contenant des particules,
(c) à mettre ce film au contact d'une membrane en hydrocarbure fluoré se présentant sous sa forme thermoplastique,
(d) à mettre le film contenant les particules au contact d'une matrice électriquement conductrice et perméable sur le plan hydraulique, formant ainsi un stratifié comportant une membrane sur un côté, une matrice sur l'autre côté et, entre les deux, de multiples particules actives sur le plan catalytique, la matrice étant choisie parmi un tissu de carbone, un papier carbone, un feutre de carbone, un tamis métallique, un feutre métallique ou une tôle poreuse, cette matrice possédant une résistivité de 600 000 à 1375 microohms-centimètres, et

(e) à appliquer une pression suffisante sur ce stratifié pour incruster au moins une partie de la matrice dans la membrane tandis que cette membrane est dans son état thermoplastique, en formant ainsi une membrane sur laquelle les particules actives sur le plan catalytique sont présentes à un niveau d'au moins environ 25 mg/cm² de surface de membrane,
(f) à convertir la membrane de façon à la faire passer dans son état ionique.

2. Procédé suivant la revendication 1, selon lequel, avant façonnage sous forme d'un film avec un polymère actif échangeur d'ions, on met les particules électriquement conductrices et à activité catalytique directement en contact avec au moins une partie d'une face de la membrane, tandis que cette membrane se trouve dans un état ramolli, de façon à former un produit composite membrane/particules, les particules à activité catalytique étant présentes à un niveau supérieur à 25 mg/cm² de surface de membrane, en ce qu'on soumet ce produit composite membrane/particules à une pression suffisante pour incrustrer au moins une partie des particules dans la membrane ramollie et en ce qu'on met ce produit composite membrane/particules en contact avec la matrice électriquement conductrice et perméable sur le plan hydraulique.

3. Procédé suivant la revendication 2, selon lequel on choisit la matrice parmi la toile de carbone, le papier carbone, le feutre de carbone, un tamis métallique, un feutre métallique ou une tôle poreuse.

4. Procédé suivant l'une quelconque des revendications précédentes, selon lequel la matrice est une toile de carbone ayant une épaisseur de 0,05 à 0,65 mm.

5. Procédé suivant la revendication 2, 3 ou 4, selon lequel les particules à activité catalytique ont une taille moyenne, en diamètre, de 10 à 30 µm.

6. Procédé suivant la revendication 5, selon lequel les particules à activité catalytique ont une surface spécifique de 800 à 1800 m²/g.

7. Procédé suivant l'une quelconque des revendications précédentes, selon lequel on choisit les particules à activité catalytique, dans le cas d'anodes, parmi les oxydes métalliques du groupe du platine, seuls ou en combinaison avec un oxyde d'un métal filmogène ou de l'oxyde de cobalt, soit seul, soit en combinaison avec d'autres oxydes métalliques de métaux filmogènes, et, dans le cas des cathodes, parmi les métaux, ou oxydes métalliques, du groupe du platine.

8. Procédé suivant l'une quelconque des revendications précédentes, selon lequel les particules à activité catalytique sont présentes sur la membrane à un niveau de 0,4 à 1,0 mg/cm² de surface de membrane.

9. Procédé suivant l'une quelconque des revendications précédentes, selon lequel les particules à activité catalytique sont appliquées sur les deux faces de la membrane.

10. Procédé suivant l'une quelconque des revendications précédentes, selon lequel l'hydrocarbure fluoré polymère a un poids équivalent de 500 à 2000.

11. Procédé suivant l'une quelconque des revendications précédentes, selon lequel de multiples particules électriquement conductrices forment une anode sur l'une des faces de la feuille formant membrane et de multiples particules électriquement conductrices forment une cathode sur la face opposée de cette membrane.

12. Procédé suivant l'une quelconque des revendications 1 à 10, selon lequel l'une des électrodes est constituée d'une feuille formant membrane portant, sur l'une de ses faces, de multiples particules électriquement conductrices et, sur l'autre face de cette feuille formant membrane, l'électrode est constituée d'une plaque métallique poreuse.

13. Procédé suivant l'une quelconque des revendications précédentes, selon lequel la membrane a une épaisseur de 0,0025 à 0,4 mm.

14. Procédé suivant la revendication 2, selon lequel on porte la température de la membrane formée d'hydrocarbure fluoré à une valeur de 150°C à 350°C pour des membranes dans lesquelles Y = $-SO_2F$ et de 150°C à 300°C pour des membranes dans lesquelles Y = $-CO_2CH_3$.

15. Procédé suivant l'une quelconque des revendications précédentes, selon lequel la pression servant à incruster les particules dans la membrane est de 13 780 à 110 240 kPa.

16. Procédé suivant la revendication 15, selon lequel on applique la pression pendant 0,2 à 2 minutes.

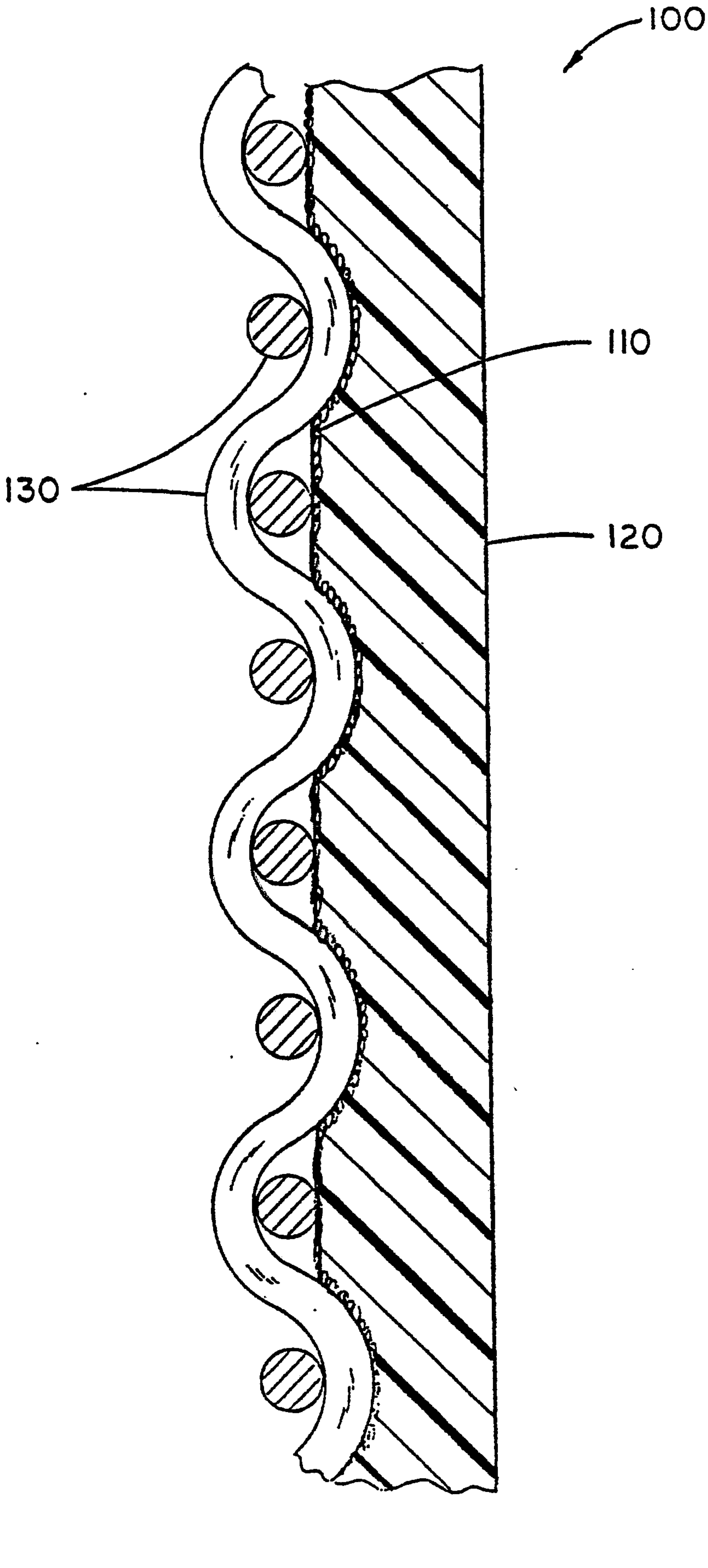
100
110
130
120